# EUROPEAN PATENT SPECIFICATION

(11) **EP 4 003 818 B1**
(45) Date of publication and mention of the grant of the patent: **07.10.2026**
(21) Application number: 20746308.4
(22) Date of filing: 21.07.2020
(51) Int. Cl.: B62D 25/16, B62D 25/18, B62D 35/00

(54) **ROUNDED WHEELBAY**
ABGERUNDETER ACHSSTAND
PUITS DE ROUE ARRONDI

(30) Priority: 22.07.2019 NL 2023548
(43) Date of publication of application: 01.06.2022
(73) Proprietor: DAF Trucks N.V., 5643 TW Eindhoven (NL)
(72) Inventor: VAN DEN HEIJKANT, Rob Adrianus Johannes, 5643 TW Eindhoven (NL); RENTEMA, Date Willem Egbert, 5643 TW Eindhoven (NL); VAN DIJK, Niek Jan Gerard, 5643 TW Eindhoven (NL); KRUIJSSEN, Frouke, 5643 TW Eindhoven (NL)
(74) Representative: V.O.
(86) International application number: PCT/NL2020/050477
(87) International publication number: WO 2021/015614

(56) References cited:
- EP-A1- 0 897 854
- EP-A1- 3 560 800
- GB-A- 2 014 525
- US-A- 5 277 444

## Description

### BACKGROUND OF THE INVENTION

The present invention relates to the reduction of liquid spray and induced aerodynamic drag of heavy goods vehicles known as trucks. In particular, the invention relates to a truck wheel bay having a mudguard facing the running surface of a wheel and having an outer valance located on the periphery in the plane of an outer side surface of the truck. Trucks are subjected to strict regulatory requirements relating to spray reduction and wheel bay modifications such as, but not limited to, Commission Regulation (EU) No. 109/2011 EEC. The mentioned requirements for trucks call for a need to change the wheel bay to reduce water spray generated from a wheel traveling on a wet surface. At the same time the invention intends to reduce aerodynamic drag caused by wheel motion. EP0897854 describes a spray reducing device for vehicle wheels in the form of a mudflap that is fitted to a vehicle mudguard. The mudflap has front and rear walls that are spaced apart so as to define a water discharging chamber. The front wall upright and has an inclined surface that directs water incident upon it, from the vehicle wheel, in an upward direction. At the end of the front wall a guide lip intercepts the trajectory of the water and directs it through a clearance and downwards into the water discharging chamber.

GB2014525 describes a mud guard for a motor vehicle with a curved trough and a stratum of filtering material fitted within the trough. The stratum is spaced from the bottom of the trough so as to leave a space between the stratum and the bottom of the trough. An opening is formed in the side of the trough, said opening leading from the space between the stratum and the bottom of the trough. Discharge ducts lead out of the closed ends of the trough to one side of the trough.

US5277444 describes a spray control device for controlling the lateral discharge of spray generated by the rotation of a wheel of a wheeled vehicle during its forward movement over a wet surface. The device comprises a hollow body mountable to a sidewall of the vehicle above and laterally outwardly in relation to the wheel of the vehicle. The hollow body has a vertically elongated forwardly opening inlet at a forward end thereof for intaking air into the hollow body during forward movement of the vehicle, a horizontally elongated laterally inwardly directed outlet at a lower edge of the body, and at least one channel extending from the inlet to the outlet for directing air flow from the inlet to the outlet, which channel decreases in cross-sectional area from the inlet to the outlet whereby air flow speed is increased to create a high velocity air screen directed inwardly above and across the wheel toward the center of the vehicle.

The object of the claimed invention is to reduce the liquid spray generated by the traveling of a truck on a wet surface. A further object of the invention is to reduce traveling wheel drag of a truck.

### SUMMARY OF THE INVENTION

The invention aims for solving the mentioned objects by providing a truck wheel bay as defined in the appended claims. The truck wheel bay follows the shape of a truck wheel. The wheel bay has an outer valance located on the periphery of the wheel bay opening. The outer valance is in the same plane as the outer side surface of the truck. The wheel bay has a mudguard inside which faces the running surface of the wheel. The valance extends concentrically, to the wheel and possibly a fender, over the arc of the wheel bay opening. The valance starts at the front part of the wheel bay and extends to the rear of the wheel bay.

The valance contains a cut out portion extending from a point along the rear part of the valance to the bottom surface of the truck. The cut out exposes a portion of the mudguard. The exposed portion of the mudguard has a rounded guiding surface which connects the mudguard to the outer side surface of the truck. The aerodynamic effect is that spray is optimally suppressed by guiding it in the longitudinal direction, towards the mudguard and in rearward direction of the truck thus reducing the side ways extension of spray that is emitted from the wheels and the road surface.

### BRIEF DESCRIPTION OF THE DRAWINGS

The invention is further described with reference to the drawings wherein:
Figure 1 shows a schematic perspective embodiment of the present invention;
Figure 2 shows a schematic top view of the embodiment of Figure 1;
Figure 3 (A, B, C) shows a top view of an exposed mud guard portion with a plurality of rounded guiding surface variations ;
Figure 4 (A, B) shows an embodiment having fins and corrugations on a mudguard surface;
Figure 5 (A, B) shows a comparison view with a prior art example of the airflow.

### DETAILED DESCRIPTION

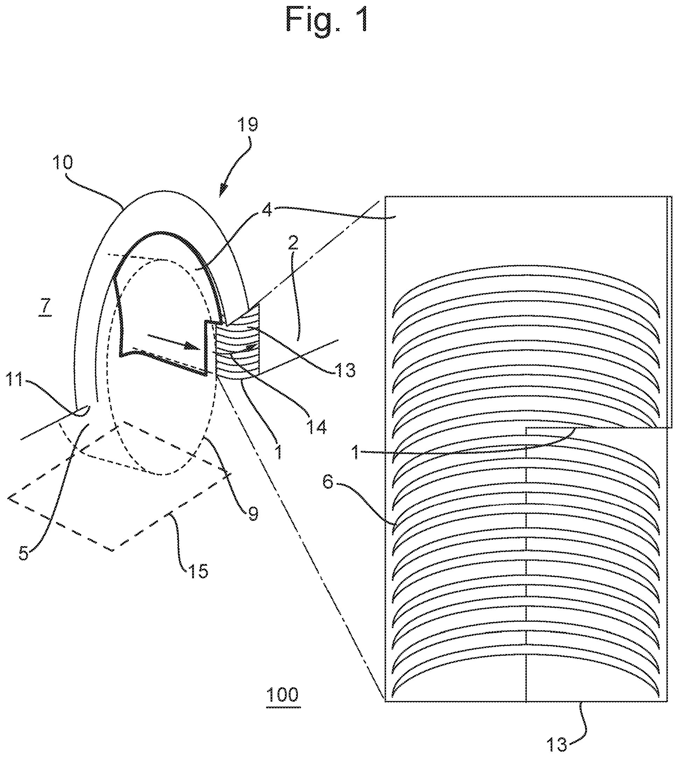

The present invention provides for a truck wheel bay 7 of a wheel enclosure 100 as shown in Figure 1, having a mudguard 4, also shown in exploded view. The wheel bay 7 follows the shape of a truck wheel 9 and further has an outer valance 3. Valance 3 is a component located approximately within a vertical plane that is parallel to the longitudinal plane of the vehicle and which may form part of a mudguard or of the vehicle bodywork. The outer valance 3 is located on a peripheral arc 10 of a truck wheel bay's opening.

The valance 3 extends towards a bottom surface of the truck concentrically over the arc from a front part 11 of the wheel bay 7 to a rear portion. The wheel bay 7 has a mudguard 4 facing a running surface 5 of the wheel 9. The mudguard 4 is understood to include a component intended to trap a liquid thrown up by tyres in motion. The mudguard 4 directs the trapped liquid towards a road surface. The mudguard 4 may entirely or partially form an integral part of the truck bodywork or other parts of the truck. The valance 3, which may include a fender 19 and an outer side surface 2 of the truck, contains a cut out portion 13 near the valance's rear portion. The cut out 13 extends from a point along the rear part of the valance 3 to the bottom surface of the truck. The cut out 13 exposes the mudguard 4 which comprises a guiding portion 1 with a rounded surface. The guiding portion 1 connects the mudguard 4 and the outer side surface 2 of the truck.

The guiding portion 1 directs and facilitates the out flowing of air 14 from the wheel bay 7 along the outer side surface 2 of the truck trailing behind the front wheel enclosure 100. The cut out 13 and guiding portion 1 assists air flowing out from inside the wheel bay to follow the side of the truck. By following the side of the truck, wheel bay vortices (called the wake) and drag is reduced. The air flowing out of the wheel bay via the cut out 13 and guiding portion 1 has a flow substantially free from turbulences which is capable of capturing spray and leading it in a rearward direction.

In a further aspect of the invention the truck wheel bay 7 has fins 6 located on the mud guard 4 (see Figure 1, exploded view). The fins 6 may extend on the guiding portion 1 in the longitudinal direction of the truck. The extension of the fins 6 create a ribbed profile on the mud guard 4 which may include the guiding portion 1.

The fins 6 may be curved down toward the road surface 15 in a lateral direction relative to the longitudinal direction of the truck. The fins increase a catchment surface area of the mudguard 4 and guiding portion 1. The increased catchment surface area provides a larger capacity for collecting spray. The larger capacity of the mud guard to collect liquid reduces the amount of spray that flows out from the wheel bay 7. The effect of the mud guard that spray is suppressed, in that it reduces pulverisation of liquid, which may include water, thrown upwards by the tyres of a truck in motion. Thus the mud guard, valance, cut out and fins work together to form a spray suppression system that additionally reduces wheel bay drag.

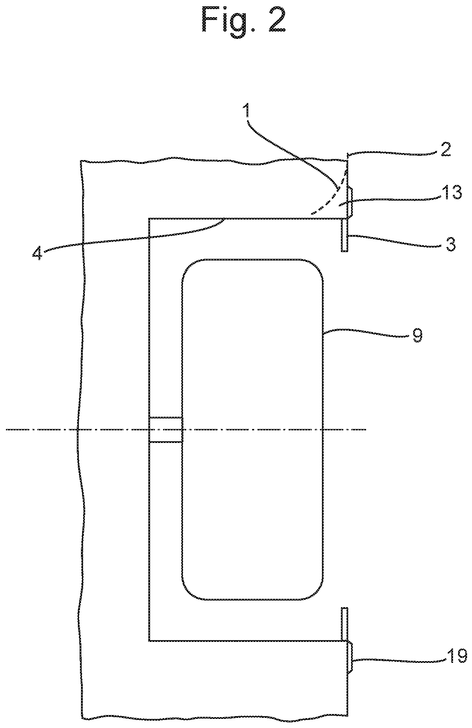

In Figure 2, a schematic top view layout is shown of the outer valance 3 relative to the fender 19. The valance 3 and fender 19 are in the same plane as the outer side surface 2 of the truck. The layout shows how the cut out 1 of valence 3 and further may extend to include fender 19 and a portion of the outer side surface 2 of the truck. A larger cut out 13 with a larger rounding of the guiding portion 1 may further reduce the resistance to air flowing 14 out of the wheel bay 1.1. A lower wheel bay resistance, to outflowing air 14 may result in reduced wheel bay drag.

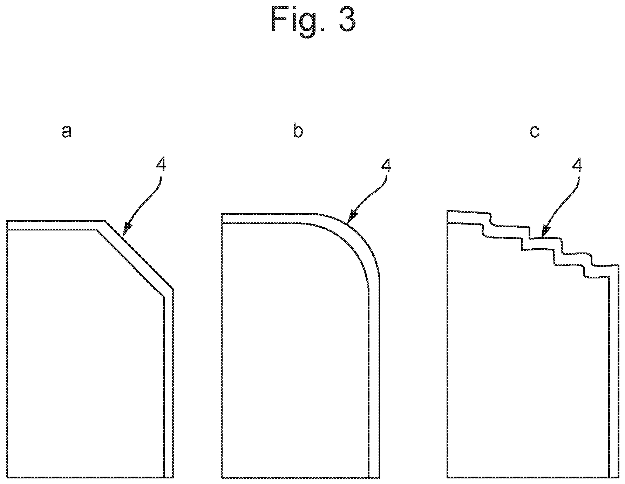

In Figure 3, various alternatives a, b, c, are shown in a top view of an exposed mud guard portion 4 with a plurality of rounded guiding surface variations. In 3a a mudguard portion is depicted to include a chamfer of a corner, in 3b the mudguard 4 has a corner with a radius and in Figure 3c the mudguard portion 4 has a jagged tapering of the corner. Other means known in the art by the skilled person to smooth the transition between two perpendicular surfaces are included in the understanding of a rounding. The rounding of the guiding portion 1 facilitates a smooth transition of the airflow 14 out of the wheel bay 100.

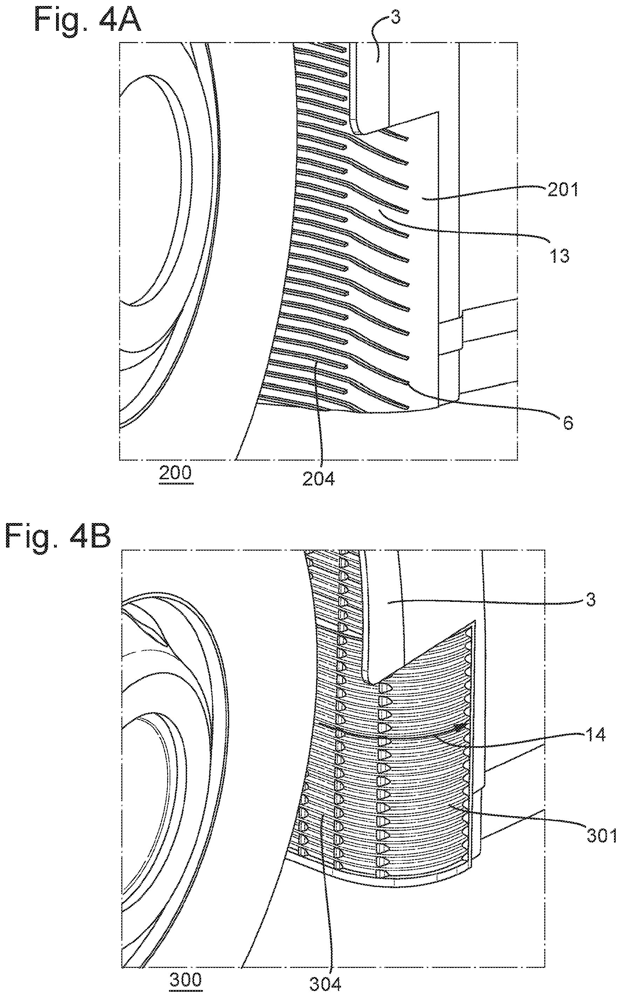

Figure 4 shows a further aspect of the invention. In the further aspect, Figure 4A, the mud guard 204 of truck wheel bay 200 has a corrugated rounded mudguard surface 201 with fins 6. In Figure 4B, corrugated surface 301 is arranged that the ridges and valleys of the corrugation run in a lateral direction relative to the longitudinal direction of the truck. The corrugated surface 301 performs a similar function than a mudguard with fins 6. The corrugated rounded surface 301 of the mud guard 304 increases the spray collecting capacity of the mud guard 304 by small slots to collect water. The spray collecting capacity of the mudguard 304 is increased due to an increased surface area of the corrugated mudguard 304. The corrugations further help streamline the outflowing air 14 from the wheel bay via the guiding portion 301.

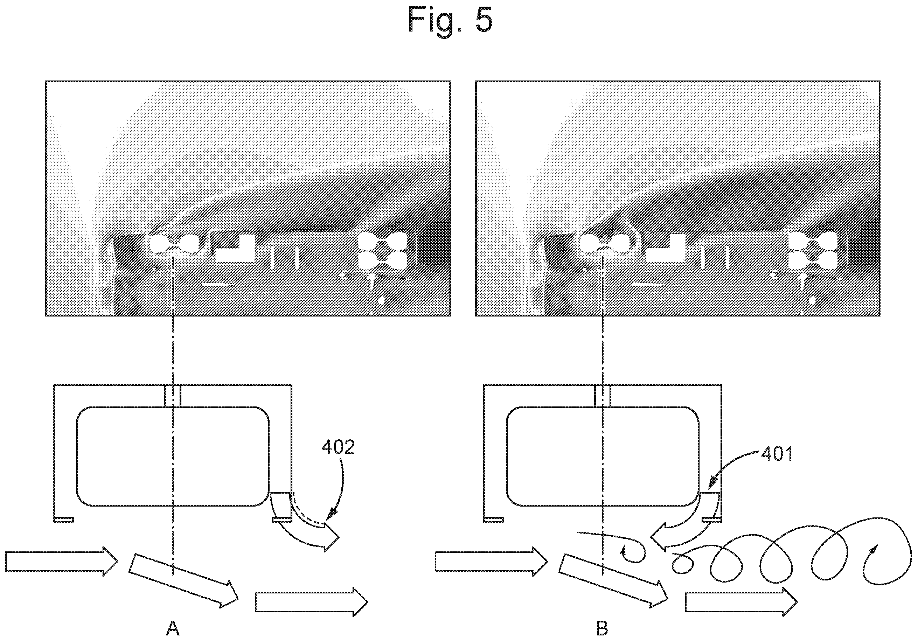

In Figure 5 the difference is clearly shown between a cut out 13 and guiding surface 1 to the flow path 402 of the out flowing air (see Figure 5A) and the flow path 401 of a wheel bay without the cut out and guiding surface (see Figure 5B). The out flowing air which is guided by the cut out 13 and guiding surface 1 is projected much closer to the side of the truck and creates far less vortices and drag.

### ALTERNATIVE EMBODIMENTS

In an alternative embodiment of the invention the wheel bay has a mudguard with guiding portion which has fins on the mudguard surface. The fins extend in a longitudinal directions as shown in figure 1. The fins may be curved down toward the road surface and assists the out flowing of the air from the wheel enclosure 7.

In an alternative embodiment of the invention the wheel bay with a mudguard contains a cut out near the rear part of the wheel bay in the valance, fender and the outer side surface of the truck as shown in figure 2. The rounded guiding portion 1 connects the mud guard 4 and the outer side surface 2 of the truck.

In an alternative embodiment of the invention the wheel bay has a mudguard with guiding portion which is chamfered, tapered or jagged from the mudguard 4 to the outer side surface of the truck as shown in figure 3. In an alternative embodiment of the invention the wheel bay has a mudguard with guiding portion 1 which has a corrugated surface 301 as shown in figure 4. The corrugation of the mud guard and guiding portion surfaces contains ridges and valleys which extend in a lateral direction relative to the longitudinal direction of the truck and assists the out flowing of the air 14 from the wheel enclosure 300.

## Claims

1. A truck wheel bay (7) having a mudguard (4) facing the running surface (5) of a wheel, the wheel bay following the shape of a wheel (9) of a truck, the wheel bay further having an outer valance (3) located on the periphery in the plane of an outer side surface (2) of the truck; said wheel bay and said valance extending towards a bottom surface of the truck concentrically over an arc (10) from a front part (11) of the wheel bay to a rear portion, wherein said valance contains a cut out portion (13) near the rear portion of the valance (3) extending from a point along the rear part of the valance to the bottom surface of the truck exposing a portion of the mudguard (4), wherein said exposed mud guard portion (1) has a rounded guiding surface, connecting the mudguard (4) to the outer side surface of the truck; **characterized in that** said guiding surface (1) directs out flowing air (14) from the wheel bay (7) along the outer side surface (2) of the trailing body of the truck.

2. A truck wheel bay (7) according to claim 1, further comprising fins (6) located on the mudguard (4) extending in a longitudinal direction of the truck forward.

3. A truck wheel bay (7) according to claim 2 wherein said fins (6) are curved down toward the road surface (15).

4. A truck wheel bay (7) according to any preceding claim, wherein the said mudguard surface is a corrugated surface (201, 301) with ridges and valleys running in a lateral direction relative to the longitudinal direction of the truck.

5. A truck wheel bay (7) according to any preceding claim, wherein said cut out (13) near the rear portion of the valance (3) extends from a point midway along the rear part of the said valance to the bottom surface of the truck.

6. A truck wheel bay (7) according to any preceding claim wherein the cut out (13) extends into the said fender (19) and towards the said outer side surface (2) of the truck.

## Patentansprüche

1. Radkasten (7) eines Lastkraftwagens mit einem Kotflügel (4), der der Lauffläche (5) eines Rades zugewandt ist, wobei der Radkasten der Form eines Rades (9) eines Lastkraftwagens folgt, wobei der Radkasten ferner eine äußere Schürze (3) aufweist, die am Umfang in der Ebene einer äußeren Seitenfläche (2) des Lastkraftwagens angeordnet ist; wobei sich der Radkasten und die Schürze konzentrisch über einen Bogen (10) von einem vorderen Teil (11) des Radkastens zu einem hinteren Abschnitt in Richtung einer Unterseite des Lastkraftwagens erstrecken, wobei die Schürze einen Ausschnitt (13) nahe dem hinteren Abschnitt der Schürze (3) enthält, der sich von einem Punkt entlang des hinteren Teils der Schürze bis zur Unterseite des Lastkraftwagens erstreckt und einen Teil des Kotflügels (4) freilegt, wobei der freigelegte Kotflügelabschnitt (1) eine gerundete Führungsfläche aufweist, die den Kotflügel (4) mit der äußeren Seitenfläche des Lastkraftwagens verbindet; **dadurch gekennzeichnet, dass** die Führungsfläche (1) aus dem Radkasten (7) ausströmende Luft (14) entlang der äußeren Seitenfläche (2) des hinteren Fahrzeugaufbaus des Lastkraftwagens leitet.

2. Radkasten (7) eines Lastkraftwagens nach Anspruch 1, ferner umfassend Rippen (6), die auf dem Kotflügel (4) angeordnet sind und sich in Längsrichtung des Lastkraftwagens nach vorne erstrecken.

3. Radkasten (7) eines Lastkraftwagens nach Anspruch 2, wobei die Rippen (6) nach unten zur Fahrbahn (15) hin gekrümmt sind.

4. Radkasten (7) eines Lastkraftwagens nach einem der vorhergehenden Ansprüche, wobei die Kotflügelfläche eine gewellte Fläche (201, 301) mit Stegen und Tälern ist, die in lateraler Richtung relativ zur Längsrichtung des Lastkraftwagens verlaufen.

5. Radkasten (7) eines Lastkraftwagens nach einem der vorhergehenden Ansprüche, wobei sich der Ausschnitt (13) nahe dem hinteren Abschnitt der Schürze (3) von einem Punkt in der Mitte des hinteren Teils der Schürze bis zur Unterseite des Lastkraftwagens erstreckt.

6. Radkasten (7) eines Lastkraftwagens nach einem der vorhergehenden Ansprüche, wobei sich der Ausschnitt (13) in die Radabdeckung (19) und in Richtung der äußeren Seitenfläche (2) des Lastkraftwagens erstreckt.

## Revendications

1. Passage de roue de camion (7) ayant un garde-boue (4) faisant face à la surface de roulement (5) de la roue, le passage de roue épousant la forme d'une roue (9) d'un camion, le passage de roue ayant en outre un rebord extérieur (3) situé sur la périphérie dans le plan d'une surface latérale extérieure (2) du camion; ledit passage de roue et ledit rebord s'étendant concentriquement vers une surface inférieure du camion sur un arc (10) depuis une partie avant (11) du passage de roue jusqu'à une partie arrière, dans lequel ledit rebord contient une partie découpée (13) près de la partie arrière du rebord (3) s'étendant d'un point le long de la partie arrière du rebord jusqu'à la surface inférieure du camion exposant une partie du garde-boue (4), où ladite partie de garde-boue exposée (1) a une surface de guidage arrondie, reliant le garde-boue (4) à la surface latérale extérieure du camion; **caractérisé en ce que** ladite surface de guidage (1) dirige l'air sortant (14) du passage de roue (7) le long de la surface latérale extérieure (2) de la caisse arrière du camion.

2. Passage de roue de camion (7) selon la revendication 1, comprenant en outre des ailettes (6) situées sur le garde-boue (4) s'étendant dans une direction longitudinale de l'avant du camion.

3. Passage de roue de camion (7) selon la revendication 2, dans lequel lesdites ailettes (6) sont incurvées vers le bas en direction de la surface de la route (15).

4. Passage de roue de camion (7) selon l'une quelconque des revendications précédentes, dans lequel ladite surface du garde-boue est une surface ondulée (201, 301) avec des crêtes et des creux s'étendant dans une direction latérale par rapport à la direction longitudinale du camion.

5. Passage de roue de camion (7) selon l'une quelconque des revendications précédentes, dans lequel ladite partie découpée (13) près de la partie arrière du rebord (3) s'étend d'un point situé à mi-chemin le long de la partie arrière dudit rebord jusqu'à la surface inférieure du camion.

6. Passage de roue de camion (7) selon l'une quelconque des revendications précédentes, dans lequel la partie découpée (13) s'étend dans ladite aile (19) et vers ladite surface latérale extérieure (2) du camion.
